# EUROPÄISCHE PATENTSCHRIFT

(11) **EP 0 679 491 B1**
(45) Veröffentlichungstag und Bekanntmachung des Hinweises auf die Patenterteilung: **01.03.2000**
(21) Anmeldenummer: 95102743.2
(22) Anmeldetag: 27.02.1995
(51) Int. Cl.: B29C 45/17

(54) **Spritzgiessmaschine zur Herstellung von Hohlwandigen Behältnissen**
Injection moulding machine for manufacturing hollow-walled containers
Machine à mouler par injection pour fabriquer des récipients à paroi creuse

(30) Priorität: 28.04.1994 DE 4414889
(43) Veröffentlichungstag der Anmeldung: 02.11.1995
(73) Patentinhaber: Krauss-Maffei Kunststofftechnik GmbH, 80997 München (DE)
(72) Erfinder: Klotz, Bernd, D-85232 Günding (DE)
(74) Vertreter: Rucker, Bernd, Dipl.-Ing.

(56) Entgegenhaltungen:
- EP-A- 0 363 948
- DE-C- 4 002 503
- NL-A- 8 903 105
- US-A- 5 254 306
- PATENT ABSTRACTS OF JAPAN vol. 017, no. 705 (M-1534), 22.Dezember 1993 & JP-A-05 245867 (ASAHI CHEM IND CO LTD), 24.September 1993,
- KUNSTSTOFFE, Bd. 79, Nr. 11, 1.November 1989, Seiten 1102-1107, XP000175208 KLOTZ B ET AL: "NEUE MOGLICHKEITEN BEIM SPRITZGIESSEN DURCH DAS GASINNENDRUCKVERFAHREN"

## Beschreibung

Die Erfindung betrifft eine Spritzgießmaschine gemäß Oberbegriff des Anspruchs 1.

Bei einer aus der EP 0 363 948 bekannten Spritzgießmaschine der im Oberbegriff genannten Art werden die Hohlräume der Spritzgießteile dadurch geschaffen, daß in den Formhohlraum zunächst über eine gesonderte Zufuhrdüse eine bestimmte Menge an Kunststoffschmelze eingespritzt wird, in die dann über eine in die Schmelzemenge eintauchende Hohlnadel ein Druckmedium, z.B. Gas, geleitet wird, das im Kernbereich der Schmelzemenge einen Hohlraum bildet und das die restliche Schmelzemenge gegen die Wandungen des Formhohlraumes drückt, wo die Schmelze erstarrt, wodurch sich ein hohles Spritzgießteil ausformt. Bei diesem als Gasinnendruckverfahren bekannten Verfahren zum Herstellen von hohlen Kunststoffteilen ergeben sich die Hohlräume und Wandstärken der Spritzgießteile entsprechend den Ablaufvorgängen, in denen die im Formhohlraum befindliche Schmelzemenge aufgeblasen wird und an den Innenwandungen erstarrt. Eine genaue Bestimmung der Abmessungen der Hohlräume und deren exakte Positionierung innerhalb des Spritzgießteils ist dabei nicht möglich.

Es ist ferner bekannt, die Hohlräume bei Spritzgießteilen dadurch zu schaffen, daß Kernelemente vorgesehen sind, die während des Spritzvorganges im Formhohlraum eine genaue Position einnehmen und die nach dem Erstarren der Kunststoffschmelze gezogen werden. Der damit entstandene Hohlraum, beispielsweise der Wandungshohlraum eines Behältnisses ist jedoch nach außen offen oder muß durch ein gesondertes Deckelelement verschlossen werden.

Der Erfindung liegt daher die Aufgabe zugrunde, eine Spritzgießvorrichtung und ein Spritzgießverfahren anzugeben, mit denen Spritzgießteile mit geschlossenen Hohlräumen hergestellt werden können, die genaue Abmessungen aufweisen und die innerhalb des Spritzgießteils genau positioniert sind.

Zur Lösung dieser Aufgabe ist erfindungsgemäß eine Spritzgießvorrichtung mit den Merkmalen des Anspruchs 1 und ein Spritzgießverfahren mit den Merkmalen des Anspruchs 2 vorgesehen.

Durch das Ausfüllen des Wandungshohlraumes in der Behälterhohlwand mittels des Kernelements während des Spritzvorganges und durch das nachfolgende Zurückziehen des Kernelementes bei gleichzeitiger Einleitung von Druckgas in den frei werdenden Hohlraum wird bewirkt, daß sich die während der Abkühlphase der Kunststoffschmelze einstellende Schwindung ausgleicht.

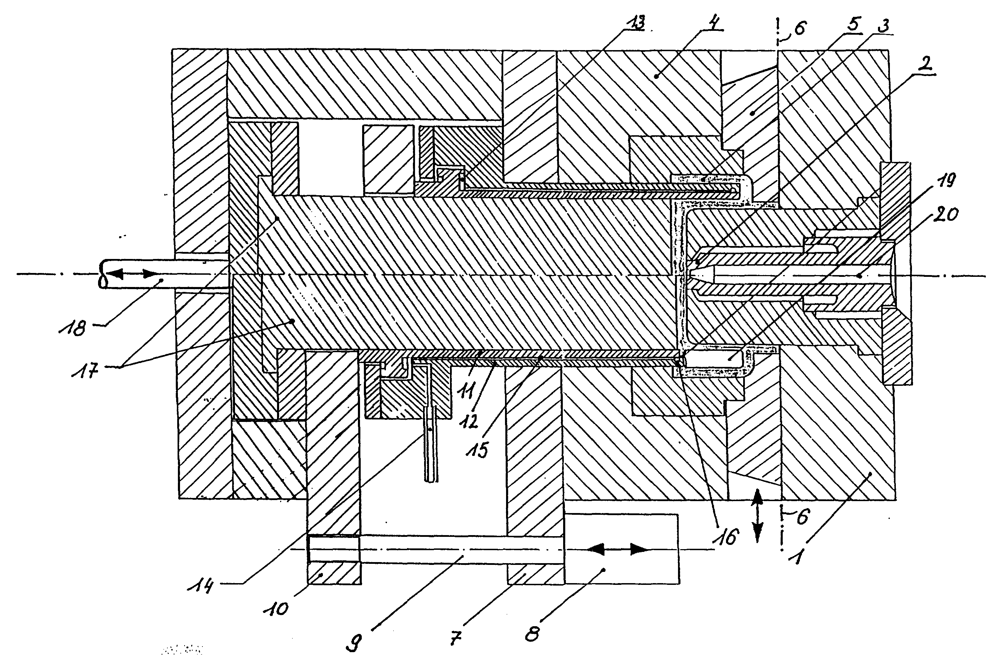

Die Erfindung wird nachfolgend anhand der Zeichnung näher erläutert.

Die Zeichnung zeigt in einem oberen Halbschnitt die Form einer ansonsten nicht dargestellten Spritzgießmaschine in einer ersten Betriebsstellung und in einem unteren Halbschnitt die gleiche Form in einer nachfolgenden Betriebsstellung.

Die Zeichnung zeigt ein erstes, mit der festen Formaufspannplatte der Spritzgießmaschine verbundenes Werkzeugteil 1, das die Spritzdüse 2 für die Zufuhr von Kunststoffschmelze in die Formkavität 3 trägt, und ein zweites mit der beweglichen Formaufspannplatte der Spritzgießmaschine verbundenes Werkzeugteil 4. Zwischen dem ersten und dem zweiten Werkzeugteil 1 und 4 befindet sich ein drittes Werkzeugteil 5, das zweigeteilt ist und quer zu der Bewegungsrichtung des zweiten Werkzeugteils 4 verfahrbar ist. Die Formtrennebene 6 befindet sich zwischen dem ersten und dem dritten Werkzeugteil 5.

Am zweiten Werkzeugteil 4 befindet sich eine Stützplatte 7, an der eine aus einem Hydraulikzylinder 8 und einer Kolbenstange 9 bestehende Vorschubeinrichtung für eine Trägerplatte 10 angeordnet ist. Mit der Trägerplatte 10 ist ein aus einer Innenhülse 11 und einer Außenhülse 12 bestehendes Kernelement verfahrbar.

Das Kernelement hat an dem der Trägerplatte 10 zugewandtem Ende zwischen Innen- und Außenhülse 11 und 12 eine Kolben-Zylindereinheit 13 ausgebildet, die über eine Gaszufuhrdüse 14 mit Druckgas aus einem Gasaggregat beaufschlagbar ist. Das Druckgas ist über einen Zuführkanal 15 ferner mit einem Ringvolumen 16 in Verbindung, das durch eine in der Außenhülse 12 befindliche Ringnut gebildet wird.

Die Trägerplatte 10 und die Innenhülse 11 sind von einem Bodenkolben 17 durchsetzt, der über eine Kolbenstange 18 mittels eines Hydraulikzylinders (nicht dargestellt) axial verschiebbar ist.

Die Fomkavität 3 wird somit vom ersten, zweiten und dritten Werkzeugteil 1, 4 und 5 vom Bodenkolben 17 umschlossen, wobei das aus Innnen- und Außenhülse 11 und 12 bestehende Kernelement in der Stellung gemäß dem oberen Halbschnitt der Zeichnung einen Wandungshohlraum 19 bildet, der in der zurückgezogenen Position des Kernelements gemäß dem unteren Halbschnitt der Zeichnung bereits voll ausgeformt ist.

Im Betrieb wird das aus der Innen- und Außenhülse 11 und 12 bestehende Kernelement mittels der Trägerplatte 10 und des Hydraulikzylinders 8 und der Kolbenstange 9 in die im oberen Halbschnitt der Zeichnung dargestellte Position gebracht, worauf die Formkavität 3 über die Spritzdüse 2 vollständig mit Kunststoffschmelze vollgespritzt wird.

Anschließend wird über die Gaszufuhrdüse 14 die Kloben-Zylindereinheit 13 und das Ringvolumen 16 mit Druckgas beaufschlagt.

Mit einer kurzen zeitlichen Verzögerung wird sodann die Trägerplatte 10 über den Hydraulikzylinder 8 mit einer definierten Geschwindigkeit in die im unteren Halbschnitt der Zeichnung dargestellte Position bewegt.

Das Druckgas in der Kolben-Zylindereinheit 13 der Innen- und Außenhülse 11 und 12 bewirkt deren Gegeneinanderverschiebung, so daß das Druckgas über die Gaszufuhrdüse 14, den Zuführkanal 15 und das Ringvolumen 16 in den Wandungshohlraum 19 gelangt und dabei die Innen- und Außenhülse 11 und 12 unter Vergrößerung des Wandungshohlraumes 19 aus der Formkavität 3 verdrängt, bis diese die im unteren Halbschnitt dargestellte Position einnehmen, wobei diese der Bewegung der Trägerplatte 10 folgen. Das im Wandungshohlraum 19 befindliche Druckgas gleicht die Schwindung während der Abkühlung der Kunststoffmasse aus.

Nach vollständiger Abkühlung der Kunststoffmasse in der Formkavität 3 wird das Druckgas über das zum Wandungshohlraum 19 offene Ringvolumen 16, den Zuführkanal 15 und die Gaszufuhrdüse 14 zum Gasaggregat (nicht dargestellt) zurückgeführt.

Im Anschluß hierzu wird der Bodenkolben 17 mittels einer hydraulisch bewegten Kolbenstange 18 in die im unteren Halbschnitt der Zeichnung dargestellte Position geschoben, in der die den Boden des Behältnisses bildende Bodenkavität verringert wird, mit der Folge, daß die verdrängte überschüssige Menge an noch plastischem Kunststoffmaterial über die Endkanten der Innen- und Außenhülsen 11 und 12 gedrückt wird und somit den Wandungshohlraum 19 im Bodenbereich verschließt.

Das Formteil, im hier erläuterten Beispiel ein Behältnis für cremeartige Substanzen, befindet sich nun im Endzustand und das Werkzeug kann an der Formtrennebene 6 geöffnet werden. Das zweite Werkzeugteil 4 wird dabei gegenüber dem ersten Werkzeugteil 1 in Richtung der Spritzachse 20 weggefahren, worauf das dritte Werkzeugteil, das zum Zweck der Ausformung eines Gewindes am Behältnis zweigeteilt ist, in entgegengesetzten Richtungen quer zur Spritzachse 20 bewegt wird.

Bei geöffnetem Werkzeug wird sodann durch eine Vorschubbewegung des Bodenkolbens 17 das fertige Formteil ausgeworfen.

## Patentansprüche

1. Spritzgießmaschine zur Herstellung von hohlwandigen Behältnissen mit mindestens zwei, einen Formhohlraum einschließenden Formwerkzeugen und Mitteln zum zuführen eines Gases in den Wandungshohlraum in der Behälterwand, **dadurch gekennzeichnet,** daß ein Kernelement vorgesehen ist, das aus einer Innenhülse (11) und einer Außenhülse (12) besteht, das Kernelement mittels einer Vorschubeinrichtung in eine den Wandungshohlraum (19) ausfüllende Stellung und in eine den Wandungshohlraum (19) abschließende Stellung verschiebbar ist, die Innenhülse (11) gegenüber der Außenhülse (12) axial verschieblich ist, die Innenhülse (11) und die Außenhülse (12) in dem in den Wandungshohlraum (19) eintauchenden Randbereich ein Ringvolumen (16) einschließen, das durch Gegeneinanderverschiebung von Innen- und Außenhülse (11,12) mit dem Wandungshohlraum (19) verbindbar ist und das über einen zwischen Innen- und Außenhülse (11,12) gelegenen Zufuhrkanal (15) an eine Gaszufuhrdüse (14) für Druckgas anschließbar ist, wobei in dem dem Wandungshohlraum (19) entgegengesetzten Ende des Kernelements die Innen- und Außenhülse (11,12) eine Kolben-Zylindereinheit (13) angeordnet ist, die mit dem Druckgas aus der Gaszufuhrdüse (14) beaufschlagbar ist, und wobei in der Innenhülse (11) ein den Behälterboden bildender Bodenkolben (17) axial verschieblich gelagert ist.

2. Spritzgießverfahren zur Herstellung von hohlwandigen Behältnissen mit mindestens zwei, einen Formhohlraum einschließenden Formwerkzeugen und Mitteln zum zuführen eines Gases in den Wandungshohlraum in der Behälterwand, **dadurch gekennzeichnet,** daß zunächst die von den Formwerkzeugen (1,3,5), dem in zurückgezogener Position befindlichen Bodenkolben (17) und dem den Wandungshohlraum (19) ausfüllenden Kernelement umschlossene Formkavität (3) vollständig mit in Schmelze befindlicher Kunststoffmasse vollgespritzt wird, daß danach über die Gaszufuhrdüse (14) die Kolben-Zylindereinheit (13) und das Ringvolumen (16) mit Druckgas beaufschlagt wird, daß danach das Kernelement von einer den Wandungshohlraum (19) ausfüllenden Position in eine den Wandungshohlraum (19) abschließende Position bewegt wird, wobei gleichzeitig infolge der Druckgasbeaufschlagung die Innen- und Außenhülse (11,12) gegeneinander verschoben werden und das Druckgas aus dem zum Wandungshohlraum (19) geöffneten Ringvolumen (16) in diesen strömt, wodurch das aus Innen- und Außenhülse (11,12) bestehende Kernelement in die den Wandungshohlraum (19) abschließende Position gedrückt wird, daß nach Abkühlung der Kunststoffschmelze das Druckgas aus dem Wandungshohlraum (19) über das Ringvolumen (16) und die Gaszufuhrdüse (14) zurückgeführt wird und daß anschließend der Bodenkolben (17) in eine die Dicke des Bodens des zu spritzenden Behältnisses verringernde Position (Darstellung im unteren Halbschnitt der Zeichnung) geschoben wird, worauf die dadurch verdrängte, noch plastische Masse an Kunststoffschmelze über den Rand des zurückgezogenen Kernelements strömt und den Wandungshohlraum (19) des Behältnisses in dessen Bodenbereich verschließt.

## Revendications

1. Machine à mouler par injection pour fabriquer des récipients à paroi creuse, comprenant au moins deux outils de formage enfermant un creux de formage, et des moyens d'amenée d'un gaz dans le creux de paroi dans la paroi du récipient, caractérisé en ce qu'un élément de noyau constitué d'un manchon interne (11) et d'un manchon externe (12) est prévu, que ledit élément de noyau est susceptible d'être déplacé, par un moyen d'avancement, dans une position remplissant ledit creux de paroi (19) et dans une position fermant ledit creux de paroi (19), que ledit manchon interne (11) est suceptible d'être déplacé axialement par rapport audit manchon externe (12), que ledit manchon interne (11) et ledit manchon externe (12) enferment un volume annulaire (16) dans la zone périphérique plongeant dans ledit creux de paroi (19), que ledit volume annulaire est susceptible d'être mis en communication avec ledit creux de paroi (19) par déplacement antagoniste desdits manchons interne et externe (11, 12) et susceptible d'être raccordé à une buse d'alimentation en gaz (14) pour un gaz comprimé par l'intermédiaire d'un canal d'alimentation (15) situé entre lesdits manchons interne et externe (11, 12), un ensemble piston-cylindre (13) étant situé dans l'extrémité, opposée audit creux de paroi (19), dudit élément de noyau à manchons interne et externe (11, 12), ledit ensemble étant susceptible d'être pressurisé par le gaz comprimé provenant de de ladite buse d'alimentation en gaz (14), et qu'un piston de fond (17) constituant le fond dudit récipient est monté de manière axialement déplaçable.

2. Procédé de moulage par injection pour fabriquer des récipients à paroi creuse, comprenant au moins deux outils de formage enfermant un creux de formage, et des moyens d'amenée d'un gaz dans le creux de paroi dans la paroi du récipient, caractérisé en que d'abord, la cavité de formage (3), enfermée par les outils de formage (1, 3, 5), le piston de fond (17) situé en position retirée et l'élément de noyau remplissant le creux de paroi (19), est complètement remplie par injection d'une masse en matière plastique en fonte, qu'ensuite, l'ensemble piston-cylindre (13) et le volume annulaire (16) sont pressurisés avec du gaz comprimé, qu'ensuite, ledit élément de noyau est deplacé à partir d'une position remplissant ledit creux de paroi (19) vers une position fermant ledit creux de paroi (19), tandis qu'en même temps, grâce à la pressurisation, lesdits manchons interne et externe (11, 12) sont déplacés l'un par rapport à l'autre, et le gaz comprimé s'écoule du volume annulaire (16), ouvert audit creux de paroi (19), dans ce-dernier, ce par quoi ledit élément de noyau constitué par lesdits manchons interne et externe (11, 12) est pressé dans la position fermant ledit creux de paroi (19), qu'après refroidissement de la fonte en matière plastique, ledit gaz comprimé est ramené à partir dudit creux de paroi (19) par l'intermédiaire dudit volume annulaire (16) et ladite buse d'alimentation en gaz (14), et qu'ensuite, ledit piston de fond (17) est poussé dans une position réduisant l'épaisseur du fond du récipient destiné à être moulé (représentée dans la demi-section inférieure du dessin), après quoi, la masse ainsi déplacée en fonte de matière artificielle encore plastique s'écoule à travers le bord dudit élément de noyau retiré refermant le creux de paroi (19) du récipient dans la zone de fond de ce-dernier.

## Claims

1. Injection moulding machine for manufacturing hollow'walled containers with at least two moulds enclosing a mould cavity and means for feeding a gas into the wall cavity in the container wall, characterised in that a core element is provided which consists of an inner sleeve (11) and an outer sleeve (12), the core element is displaceable by means of a feed device into a position filling the wall cavity (19) and into a position closing the wall cavity (19), the inner sleeve (11) is axially displaceable relative to the outer sleeve (12), the inner sleeve (11) and the outer sleeve (12) enclose, in the edge region dipping into the wall cavity (19), an annular volume (16) which can be connected to the wall cavity (19) by relative displacement of inner and outer sleeve (11, 12) and which can be attached to a gas feed nozzle (14) for compressed gas via a feed duct (15) located between inner and outer sleeve (11, 12), wherein a piston cylinder unit (13) which is loadable with the compressed gas from the gas feed nozzle (14) is arranged in the end of the core element, the inner and outer sleeve (11, 12), remote from the wall cavity (19) and wherein a base piston (17) forming the container base is mounted axially displaceably in the inner sleeve (11).

2. Injection moulding process for manufacturing hollow-walled containers with at least two moulds enclosing a mould cavity and means for feeding a gas into the wall cavity in the container wall, characterised in that the mould cavity (3) surrounded by the moulds (1, 3, 5), the base piston (17) located in the retracted position and the core element filling the wall cavity (19) is initially completely filled with polymer melt, in that the piston cylinder unit (13) and the annular volume (16) are then loaded with compressed gas via the gas feed nozzle (14), in that the core element is then moved from a position filling the wall cavity (19) into a position closing the wall cavity (19), wherein the inner and outer sleeve (11, 12) are simultaneously displaced relative to one another owing to the compressed gas loading and the compressed gas flows from the annular volume (16) opened toward the wall cavity (19) into the wall cavity (19) so that the core element consisting of inner and outer sleeve (11, 12) is pressed into the position closing the wall cavity (19), in that after cooling of the polymer melt, the compressed gas is returned from the wall cavity (19) via the annular volume (16) and the gas feed nozzle (14) and in that the base piston (17) is subsequently pushed into a position reducing the thickness of the base of the container to be injected (illustration in the lower half section of the drawing), whereupon the still plastic mass of polymer melt thus displaced flows over the edge of the retracted core element and closes the wall cavity (19) of the container in the base region thereof.
